# EUROPÄISCHE PATENTSCHRIFT

(11) **EP 0 731 627 B1**
(45) Veröffentlichungstag und Bekanntmachung des Hinweises auf die Patenterteilung: **25.03.1998**
(21) Anmeldenummer: 95118832.5
(22) Anmeldetag: 30.11.1995
(51) Int. Cl.: H05K 5/00, H05K 5/02

(54) **Explosionsdichter Klemmenkasten**
Explosion-protected terminal box
Boîtier de bornes résistant aux explosions

(30) Priorität: 10.03.1995 DE 29504164 U
(43) Veröffentlichungstag der Anmeldung: 11.09.1996
(73) Patentinhaber: Felten & Guilleaume Energietechnik AG, 51063 Köln (DE)
(72) Erfinder: Sobel, Wolfgang, Dipl.-Ing., D-26954 Nordenham (DE)

(56) Entgegenhaltungen:
- FR-A- 2 602 117

## Beschreibung

Die Erfindung betrifft eine elektrische Maschine mit einem Klemmenkasten zum elektrischen Anschluß externer Leitungen, der an der Außenseite des Maschinengehäuses mittels eines an ihn angeformten Stutzens angebracht ist, welcher hierzu mit einem Gehäusestutzen der Maschine verbunden ist.

Elektrische Maschinen, insbesondere Elektromotoren, sind mit externen Anschlußleitungen zu beschalten, um ihnen Speisestrom zuzuführen oder mit ihnen erzeugten bzw. transformierten Strom abzuführen. Die Anschlußleitungen werden in den an der Außenseite des Maschinengehäuses angebrachten Klemmenkasten hineingeführt und dort an einer Klemmenplatte mit Leitungsadern verbunden, die zu den in der elektrischen Maschine vorhandenen Stromkreisen führen, die im Falle eines Elektromotors durch dessen Wicklungen gebildet sind.

Explosionsgeschützte elektrische Maschinen haben beispielsweise ein druckfestes Maschinengehäuse, welches verhindert, daß eine im Inneren der Maschine stattfindende Explosion auch außerhalb des Maschinengehäuses wirksam wird. Der am Maschinengehäuse angebrachte Klemmenkasten darf die druckfeste Kapselung der elektrischen Maschine nicht beeinträchtigen. Hierzu sind der Klemmenkasten und das Maschinengehäuse bisher mit zueinander passenden zylindrischen Zentrierflächen versehen, an denen beide Teile zusammengefügt sind. Diese Verbindung wird mittels Schrauben fixiert.

Die Zentrierflächen dürfen nur enge Toleranzen haben, damit die Anforderungen des Explosionsschutzes erfüllt werden. Dies erfordert einen hohen Fertigungsaufwand, und außerdem ist die Montage durch Verwendung der Befestigungsschrauben umständlich.

Es ist Aufgabe der Erfindung, eine Verbindungsmöglichkeit zwischen Klemmenkasten und Maschinengehäuse anzugeben, die bei einfacher Montage die Anforderungen des Explosionsschutzes erfüllt und mit geringerem Aufwand bei der Fertigung der Verbindungselemente realisiert werden kann.

.Die Erfindung löst diese Aufgabe bei einer Maschine eingangs genannter Art dadurch, daß die Verbindung der beiden Stutzen eine Gewindeverbindung ist.

Die Gewindeverbindung zwischen Klemmenkasten und Maschinengehäuse gewährleistet einen einwandfreien Explosionsschutz, da die druckfeste Kapselung an der Verbindungsstelle zum Klemmenkasten nicht unterbrochen wird und in einfacher Weise die Druckfestigkeit gewährleistet. Die Montage ist wesentlich einfacher als bei Verwendung mehrerer Befestigungsschrauben, denn der Klemmenkasten muß mit seinem Stutzen nur auf den Gehäusestutzen aufgesetzt und dann mit mehreren Umdrehungen am Maschinengehäuse befestigt werden. Dabei kann vorteilhaft eine von mehreren möglichen Orientierungen des Klemmenkastens durch einfaches Verdrehen realisiert werden. Bereits mit wenigen Gewindegängen wird eine hohe Abdichtung erzielt, die bei einer zylindrischen Passung wesentlich längere Stutzen erfordern würde. Dadurch sitzt der Klemmenkasten praktisch unmittelbar an dem Maschinengehäuse, und eine durch die kurzen Stutzen gebildete Zwischenkammer zwischen Klemmenkasten und Maschinengehäuse hat ein nur geringes Volumen, wodurch im Falle einer Explosion in der Maschine der Explosionsdruck in dem Bereich des Klemmenkastens nicht so stark erhöht wird wie bei einem größeren Volumen der Zwischenkammer.

Vorteilhaft hat der Stutzen des Klemmenkastens ein Innengewinde und der Gehäusestutzen der Maschine ein Außengewinde. Dies erleichtert die Montage des Klemmenkastens und vermeidet eine Verringerung des Innendurchmessers des Gehäusestutzens der Maschine durch einen in ihn eingeschraubten Stutzen des Klemmenkastens. Daher kann in den Gehäusestutzen der Maschine auch eine Aderdurchführung eingesetzt werden, mit der die Leitungsadern, die zum Innenraum der Maschine führen, fixiert und gehalten werden.

Der Stutzen des Klemmenkastens kann in einer zu seiner Längsachse parallelen Durchbohrung einen Gewindestift enthalten, dem eine Stirnfläche des Gehäusestutzens gegenüberliegt, wenn der Klemmenkasten auf den Gehäusestutzen aufgeschraubt ist. Ein solcher Gewindestift dient zur Fixierung des Klemmenkastens nach dem Aufschrauben auf den Gehäusestutzen und kann so weit aus dem Stutzen des Klemmenkastens herausgeschraubt werden, daß sein nach außen ragendes Ende an der Stirnfläche des Gehäusestutzens verklemmt wird, so daß der Klemmenkasten dann nicht mehr abgeschraubt werden kann.

Die Stirnfläche hat vorteilhaft mehrere Senkbohrungen zur Aufnahme des Gewindestiftes, die auf einem Kreis, den der Gewindestift beim Aufschrauben des Klemmenkastens auf den Gehäusestutzen beschreibt, in Drehrichtung gegeneinander versetzt angeordnet sind. Dies ermöglicht ein Fixieren des Klemmenkastens in unterschiedlichen Orientierungen. Es hat sich gezeigt, daß vier jeweils um 90° zueinander versetzte Senkbohrungen für die meisten Montagefälle ausreichen.

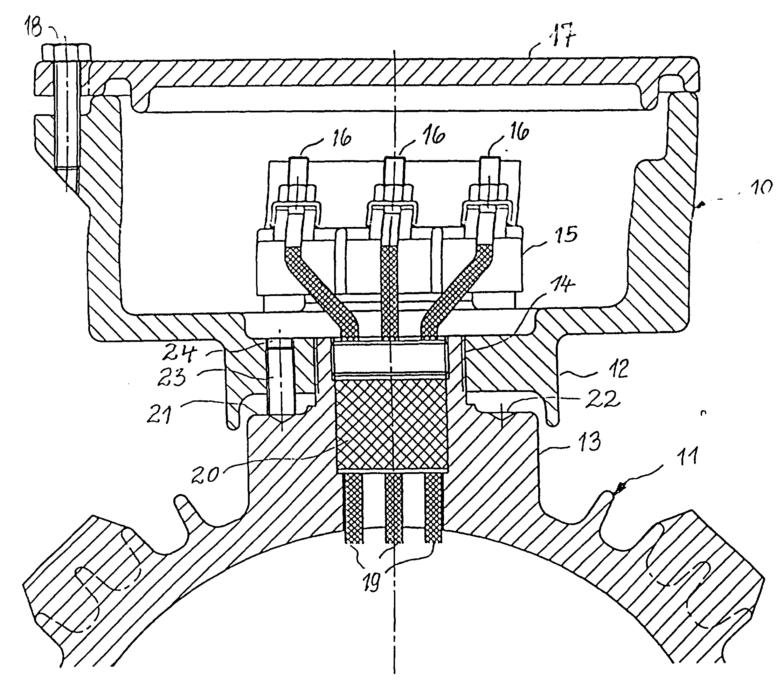

Ein Ausführungsbeispiel der Erfindung wird im folgenden an Hand der Zeichnung näher erläutert, die den Querschnitt eines Gehäuseabschnitts eines Elektromotors mit daran angebrachtem Klemmenkasten zeigt.

Die Figur zeigt einen Klemmenkasten 10, der auf das Gehäuse 11 einer elektrischen Maschine aufgeschraubt ist. Hierzu hat der Klemmenkasten 10 an seiner Unterseite einen Stutzen 12 und das Maschinengehäuse 11 an seiner Außenseite einen Gehäusestutzen 13. Beide Stutzen 12 und 13 sind bei 14 miteinander verschraubt, d.h. in diesem Bereich hat der Stutzen 12 ein Innengewinde und der Gehäusestutzen 13 ein Außengewinde.

Der Klemmenkasten 10 enthält eine Klemmenplatte 15, die mit Klemmschraubanschlüssen 16 versehen ist. Diese dienen zum Anschluß externer, in der Figur nicht dargestellter Leitungen, welche in nicht dargestellter Weise in den Klemmenkasten 10 eingeführt werden, nachdem dessen Deckel 17 aufgeklappt wurde. Der Deckel 17 kann nach Verschluß des Klemmenkastens 10 mit Stiftschrauben 18 gesichert werden, von denen in der Figur nur eine gezeigt ist.

Die Klemmschraubanschlüsse 16 sind mit Leitungsadern 19 beschaltet, welche in das Innere des Maschinengehäuses 11 führen und dort mit den Motorwicklungen verbunden sind. Die Leitungsadern durchlaufen eine Aderdurchführung 20, mit der sie in dem Gehäusestutzen 13 fixiert sind.

Der Gehäusestutzen 13 hat eine Stirnfläche 21, die gegenüber seinem Gewindeabschnitt versetzt ist und mehrere Senkbohrungen 22 enthält, in die ein Gewindestift 23 eingeschraubt werden kann, welcher in einer mit Gewinde versehenen Durchbohrung 24 im Stutzen 12 des Klemmenkastens 10 sitzt. Wenn der Klemmenkasten 10 auf den Gehäusestutzen 13 des Maschinengehäuses 11 aufgeschraubt ist, kann er in eine Drehstellung gebracht werden, in der der Gewindestift 23 einer Senkbohrung 22 gegenübersteht und in sie eingedreht werden kann. Auf diese Weise wird der Klemmenkasten 10 dann in dieser Stellung fixiert, so daß sich die Gewindeverbindung zwischen Klemmenkasten 10 und Maschinengehäuse 11 nicht lockern kann.

Bereits fünf Gewindegänge der Gewinde 14 gewährleisten eine Abdichtung der Verbindung zwischen Klemmenkasten 10 und Maschinengehäuse 11, die auch hohe Anforderungen des Explosionsschutzes erfüllt. Dadurch können der Stutzen 12 und der Gehäusestutzen 13 sehr kurz sein, so daß eine zu starke Druckentwicklung im Bereich der beiden Stutzen 12 und 13 im Falle der Explosion nicht auftritt.

## Patentansprüche

1. Elektrische Maschine mit einem Klemmenkasten (10) zum elektrischen Anschluß externer Leitungen, der an der Außenseite des Maschinengehäuses (11) mittels eines an ihn angeformten Stutzens (12) angebracht ist, welcher hierzu mit einem Gehäusestutzen (13) der Maschine verbunden ist, dadurch **gekennzeichnet**, daß die Verbindung der beiden Stutzen (12, 13) eine Gewindeverbindung (14) ist

2. Elektrische Maschine nach Anspruch 1, dadurch **gekennzeichnet**, daß der Stutzen (12) des Klemmenkastens (10) ein Innengewinde und der Gehäusestutzen (13) der Maschine ein Außengewinde hat.

3. Elektrische Maschine nach Anspruch 1 oder 2, dadurch **gekennzeichnet**, daß der Stutzen (12) des Klemmenkastens (10) in einer zu seiner Längsachse parallelen Durchbohrung (24) einen Gewindestift (23) enthält, dem eine Stirnfläche (21) des Gehäusestutzens (13) gegenüberliegt, wenn der Klemmenkasten (10) auf den Gehäusestutzen (13) aufgeschraubt ist.

4. Elektrische Maschine nach Anspruch 3, dadurch **gekennzeichnet**, daß die Stirnfläche (21) mehrere Senkbohrungen (22) zur Aufnahme des Gewindestiftes (23) hat, die auf einem Kreis, den der Gewindestift (23) beim Aufschrauben des Klemmenkastens (10) auf den Gehäusestutzen (13) beschreibt, in Drehrichtung gegeneinander versetzt angeordnet sind.

5. Elektrische Maschine nach Anspruch 4, dadurch **gekennzeichnet**, daß vier jeweils um 90° zueinander versetzte Senkbohrungen (22) vorgesehen sind.

6. Elektrische Maschine nach einem der vorhergehenden Ansprüche, dadurch **gekennzeichnet**, daß der Gehäusestutzen (13) eine Aderdurchführung (20) für Verbindungsadern (19) zwischen Klemmenkasten (10) und Innenraum des Maschinengehäuses (11) enthält.

## Claims

1. An electrical machine with a terminal box (10) for the electrical connection of external leads, which box is fitted to the exterior of the machine housing (11) by means of a connecting piece (12) which is fashioned thereon and which is connected for this purpose to a housing connecting piece (13) of the machine, **characterised in that** the connection between the two connecting pieces (12, 13) is a threaded connection (14).

2. An electrical machine as claimed in claim 1, **characterised in that** the connecting piece (12) of the terminal box (10) has an internal thread and the housing connecting piece (13) of the machine has an external thread.

3. An electrical machine as claimed in claim 1 or 2, **characterised in that** the connecting piece (12) of the terminal box (10) contains, in a bore (24) parallel to the longitudinal axis thereof, a set screw (23) which is faced by a front face (21) of the housing connecting piece (13) when the terminal box (10) is screwed onto the housing connecting piece (13).

4. An electrical machine as claimed in claim 3, **characterised in that** the front face (21) has a plurality of sink bores (22) which are provided to accommodate the set screw (23) and which are disposed in a mutually offset manner in the direction of rotation in a circle which the set screw (23) describes when the terminal box (10) is screwed onto the housing connecting piece (13).

5. An electrical machine as claimed in claim 4, **characterised in that** there are provided four sink bores (22) which are respectively mutually offset by 90°.

6. An electrical machine as claimed in one of the preceding claims, **characterised in that** the housing connecting piece (13) contains a conduit (20) for connecting wires (19) between the terminal box (10) and the interior of the machine housing (11).

## Revendications

1. Machine électrique avec un boîtier de connexions (10) pour le raccordement électrique de lignes extérieures, qui est fixé à l'extérieur du bâti de machine (11) au moyen d'une embase de jonction (12), qui est venue de matière avec le boîtier, et qui est en outre raccordée à une embase de jonction (13) du bâti de la machine, caractérisée en ce que la liaison des deux embases de jonction (12, 13) est une liaison par vissage.

2. Machine électrique selon la revendication 1, caractérisée en ce que l'embase de jonction (12) du boîtier de connexions (10) possède un filetage intérieur et en ce que l'embase de jonction (13) du bâti de la machine possède un filetage extérieur.

3. Machine électrique selon la revendication 1 ou 2, caractérisée en ce que l'embase de jonction (12) du boîtier de connexions (10) comporte, dans un trou traversant (24) parallèle à son axe longitudinal, une vis sans tête (23) qui vient en appui sur une surface frontale (21) de l'embase de jonction (13) du bâti, lorsque le boîtier de connexions (10) est vissé sur l'embase de jonction (13) du bâti.

4. Machine électrique selon la revendication 3, caractérisée en ce que la surface frontale (21) possède plusieurs fraisures (22) pour la réception de l'extrémité de la vis sans tête (23), qui sont disposées, en étant décalées les unes des autres dans le sens circonférentiel, sur un cercle que la vis sans tête (23) décrit sur l'embase de jonction (13) du bâti, lors du vissage du boîtier de connexions (10).

5. Machine électrique selon la revendication 4, caractérisée en ce qu'il est prévu quatre fraisures (22) décalées les unes des autres de 90°.

6. Machine électrique selon l'une quelconque des revendications précédentes, caractérisée en ce que l'embase de jonction (13) du bâti comporte un passage de conducteurs (20) pour les conducteurs de jonction (19) présents entre le boîtier de connexions (10) et l'intérieur du bâti (11) de la machine.
